# EUROPÄISCHE PATENTSCHRIFT

(11) **EP 2 174 271 B1**
(45) Veröffentlichungstag und Bekanntmachung des Hinweises auf die Patenterteilung: **22.05.2013**
(21) Anmeldenummer: 08784965.9
(22) Anmeldetag: 22.07.2008
(51) Int. Cl.: G06K 19/077

(54) **VERFAHREN UND VORRICHTUNG ZUR HERSTELLUNG EINES TRAGBAREN DATENTRÄGERS MIT EINEM EINBAUELEMENT**
METHOD AND DEVICE FOR PRODUCING A PORTABLE DATA CARRIER WITH A BUILT-IN ELEMENT
PROCÉDÉ ET DISPOSITIF PERMETTANT DE FABRIQUER UN SUPPORT DE DONNÉES PORTATIF, POURVU D'UN ÉLÉMENT INCORPORÉ

(30) Priorität: 23.07.2007 DE 102007034172
(43) Veröffentlichungstag der Anmeldung: 14.04.2010
(73) Patentinhaber: Giesecke & Devrient GmbH, 81667 München (DE)
(72) Erfinder: SCHRÖPF, Manuela, 81543 München (DE); JANSEN, Jens, CH-6315 Oberägeri (CH); TARANTINO, Thomas, 83410 Laufen (DE)
(74) Vertreter: Branzka, Thomas
(86) Internationale Anmeldenummer: PCT/EP2008/006003
(87) Internationale Veröffentlichungsnummer: WO 2009/012980

(56) Entgegenhaltungen:
- EP-A- 0 720 123
- EP-A- 1 244 055
- US-A1- 2005 179 122

## Beschreibung

Die Erfindung betrifft die Herstellung von kartenförmigen Datenträgern, etwa von Chipkarten oder Ausweiskarten, die ein vergleichsweise großes Einbauelement tragen, z. B. ein Display.

Datenträger dieser Art und Verfahren zu ihrer Herstellung sind seit längerem bekannt und beispielsweise im "Handbuch der Chipkarten, W. Rankl, W. Effing, Hansaverlag München, 4. Auflage" beschrieben. Die Datenträger bestehen danach aus einem durch Verbinden mehrerer Schichten oder durch Spritzguß hergestellten Kartenkörper, in den ein IC eingebettet ist. Bei kontaktbehafteter Ausführung befindet sich der IC in einem Modul, das als Einbauelement in eine dazu vorbereitete Ausnehmung in dem Kartenkörper eingesetzt wird. Das Modul trägt an seiner Oberseite ein Kontaktfeld, das bündig mit der Oberfläche des Datenträgers abschließt und Teil dieser Oberfläche wird. Der Einbau des Moduls in die Ausnehmung erfolgt unter Verwendung eines Klebers so, daß der Kleber die Freiräume zwischen Modulkontur und Ausnehmung zumindest überwiegend ausfüllt. Das Kontaktfeld des Moduls und die Kartenoberfläche bilden auf diese Weise eine plane Oberfläche. Bei kontaktloser Ausführung des Datenträgers liegen der IC sowie eine damit verbundene Antenne vollständig innerhalb des Kartenkörpers. Obwohl IC und Antenne in Bezug auf die Ebenmäßigkeit des Kartenkörpers Störungen bilden, werden in der Regel dennoch ohne weitere Maßnahmen plane Kartenoberflächen erhalten, da IC und Antenne vergleichsweise kleine bzw. filigrane Strukturen bilden. Sollen jedoch großflächige Einbauelemente wie Batterien oder in mehreren Ebenen gewickelte, drahtverlegte Spulen in einen Kartenkörper integriert oder zu seiner Oberfläche hin plaziert werden, ist das Erreichen einer zufriedenstellend planen Kartenoberfläche mit den herkömmlichen Herstellungsmethoden nicht mehr gewährleistet.

Zur Überwindung dieser Schwierigkeit ist aus der DE 196 45 071 A1 der Vorschlag bekannt, die Einbauelemente in vorbereitete Ausnehmungen einzusetzen und die entstehenden Freiräume mit Hilfe einer Schablone und einer Rakel drucklos mit Kleber zu verfüllen, wobei auf die Oberfläche mit den Einbauelementen so viel Kleber aufgebracht wird, daß nach Entfernen der Schablone die gesamte innerhalb der Schablone liegende Kartenkörperoberfläche mit einer Klebstoffschicht bedeckt ist. Noch im plastischen Zustand wird nachfolgend über die Kleberschicht eine Deckfolie aufgebracht und der danach vorliegende Aufbau anschließend zwischen einer Formfläche und einem Träger ausgehärtet. Es entsteht schließlich ein Datenträger mit einer sehr planen Oberfläche, die von der Deckfolie gebildet wird. Das Verfahren erfordert allerdings die Bereitstellung von bei der Herstellung von Karten sonst nicht gebräuchlichen Präzisionswerkzeugen, nämlich einer Schablone und einer Formfläche als Teil der Aushärtevorrichtung, welche die Planheit der Oberfläche bestimmt. Die Handhabung der Schablone wird dabei noch dadurch beeinträchtigt, daß sie mit dem Kleber in Kontakt kommt.

Aus Dokument EP 1 244 055 A2 ist ein Verfahren zur Herstellung von SD-Karten mit geringer Dicke bekannt. Dabei zunächst Bauelemente auf eine Basisfolie gesetzt. Der Bereich, aus dem später die SD-Karten geformt werden sollen, wird danach vollständig mit einem Damm eingefasst. In den von dem Damm eingefassten Bereich wird sodann Klebstoff in Form einer hoch aufstehenden Düne dosiert. Unter Zwischenlage einer Schutzschicht wird der aufgehäufte Klebstoff anschließend mittels einer Walze über den gesamten von dem Damm eingefassten Innenraum verteilt. Die Höhe des Damms definiert die Höhe der Klebstoffüberdeckung. Auf dem Damm liegt die Schutzschicht unmittelbar auf. Aus dem danach vorliegenden Halbzeug werden gleichzeitig mehrere SD-Karten hergestellt. Der den Damm enthaltende Bereich wird dabei entfernt, so dass der zuvor ausgewalzte Klebstoff die Kartenkörperkerne bildet.

Aus der EP 720 123 A2 ist weiterhin ein Verfahren zur Herstellung einer dünnen, kostengünstigen Kontaktloskarte bekannt, nach dem auf eine Grundfolie zunmächst Bauelemente sowie eine Leiterbahnstruktur aufgebracht und nachfolgend mit einem Plastikmaterial überdeckt werden. Auf das Plastikmaterial wird eine Deckschicht aufgebracht. Nach einer Variante erfolgt das Aufbringen des Füllmaterials in zwei Schritten, wobei im ersten Schritt eine Gerüstschicht bereitgestellt wird, die um die Bauelemente herum Ausnehmungen aufweist. Diese Ausnehmungen werden in einem zweiten Schritt mit Klebstoff aufgefüllt. Anschließend wird mit Hilfe von Heizdruckrollen eine obere Deckschicht aufgewalzt, wobei sich der Klebstoff gleichmäßig in den Ausnehmungen um die Bauelemente herum verteilt. Die Höhe der Ausnehmungen wird durch die Gerüstschicht bestimmt. An der Gerüstschicht liegt die aufgerollte Deckschicht unmittelbar auf. Das beschriebene Verfahren erlaubt eine kontinuierliche Fertigung. Für eine Mehrnutzentechnik ist es dagegen wenig geeignet.

Aufgabe der Erfindung ist es ein Verfahren zur Herstellung eines ein Einbauelement aufweisenden tragbaren Datenträgers anzugeben, das auch bei großen Einbauelementen eine plane Oberfläche liefert und das dabei auf der Basis üblicher Herstellungsverfahren mit wenig Zusatzaufwand realisierbar ist; insbesondere soll es in bekannter Weise möglich sein, eine Kernschicht separat bereitzustellen. Aufgabe der Erfindung ist es weiterhin, eine Vorrichtung zur Durchführung eines solchen Verfahrens anzugeben.

Diese Aufgabe wird gelöst durch ein Verfahren mit den Merkmalen des Hauptanspruchs sowie durch eine Vorrichtung gemäß Anspruch 15. Das erfindungsgemäße Verfahren hat den Vorteil, daß zu seiner Realisierung zusätzlich zu bekannten und gut beherrschten Verfahrensschritten nur we nige neuartige und wenig fehlerkritische Verfahrensschritte einzurichten sind. Das Verfahren und die dazugehörige Vorrichtung stellen entsprechend nur vergleichsweise geringe Anforderungen an die zusätzlich einzusetzenden Werkzeuge. Insbesondere vermeidet das erfindungsgemäße Verfahren den Kontakt zwischen Füllmaterial und Werkzeugen; weiterhin sind auch die Anforderungen an die Dosiergenauigkeit beim Einbringen des Füllmaterials gering.

Das erfindungsgemäße Verfahren liefert Datenträger mit einer sehr planen Oberfläche, die von einer Deckfolie gebildet wird. Da es nahezu drucklos durchgeführt werden kann, ist die Belastung der Einbauelemente beim Verfüllen der Freiräume gering. Ohne weiteres können ferner auch mehrere große Einbauelemente in einen Kartenkörper integriert werden. In vorteilhafter Weise eignet sich das erfindungsgemäße Verfahren für eine Mehrnutzenfertigung.

Vorteilhafte Weiterbildungen und zweckmäßige Ausgestaltungen der Erfindung ergeben sich aus den Merkmalen der Unteransprüche. So weisen die in den Kartenkörpern angelegten Ausnehmungen zur Aufnahme der Einbauelemente vorzugsweise eine aus dem Kartenkörper herausgebildete Positionierhilfe auf, welche die Lage eines Einbauelements in einer Ausnehmung festlegt. Die Ausnehmung kann dadurch mit vergleichsweise großer Fertigungstoleranz ausgeführt sein.

Sehr vorteilhaft wird ein erster Teil des Füllmaterials in die Ausnehmung eingebracht, bevor das Einbauelement eingesetzt wird; ein zweiter Teil des Füllmaterials wird zweckmäßig unmittelbar auf das Einbauelement gegeben. Auf diese Weise können Einbauelemente mit praktisch beliebiger Formgebung, insbesondere unregelmäßig geformte Elemente, wie Taster, oder Elemente mit Hinterschneidungen, wie Displays, in einen Kartenkörper integriert werden. Ohne weiteres lassen sich auf dieselbe Weise auch mehrteilige Einbauelemente einbauen.

In besonders vorteilhafter Ausgestaltung des erfindungsgemäßen Verfahrens werden die Datenträger in Mehrnutzentechnik in einer zunächst gemeinsamen Kernschicht hergestellt und aus dieser später ausgestanzt. Außerhalb der Kontur des späteren Datenträgers wird dabei mindestens ein Auffanggraben angelegt, der dazu dient überschüssiges Füllmaterial bei der Herstellung aufzunehmen und der später entfernt wird.

Unter Bezugnahme auf die Zeichnung wird ein Ausführungsbeispiel der Erfindung nachfolgend näher erläutert.

Es zeigen
- Fig. 1: einen Querschnitt eines Kernschichtbogens mit zwei späteren Datenträgern in einer Fertigungssituation unmittelbar vor Beginn des Rakelvorganges,
- Fig. 2: einen Ausschnitt aus einem Kernschichtbogen mit einer Ausnehmung für ein Einbauelement und Auffanggräben in Aufsicht,
- Fig. 3: einen Querschnitt eines Kernschichtbogens mit einem Auffanggraben und einer Ausnehmung in einer Fertigungssituation vor dem Einsetzen eines Einbauelementes in die Ausnehmung,
- Fig. 4: einen vereinfacht dargestellten Querschnitt eines Kernschichtbogens mit zwei späteren Datenträgern bei der Ausführung des Rakelvorganges,
- Fig. 5: einen vereinfachten Querschnitt eines Kernschichtbogens in einer Fertigungssituation unmittelbar nach Dosieren einer ersten, nicht flüssigen Füllmaterialmenge,
- Fig. 6: ein Flußdigramm mit den Bearbeitungsschritten zur Herstellung eines Datenträgers.

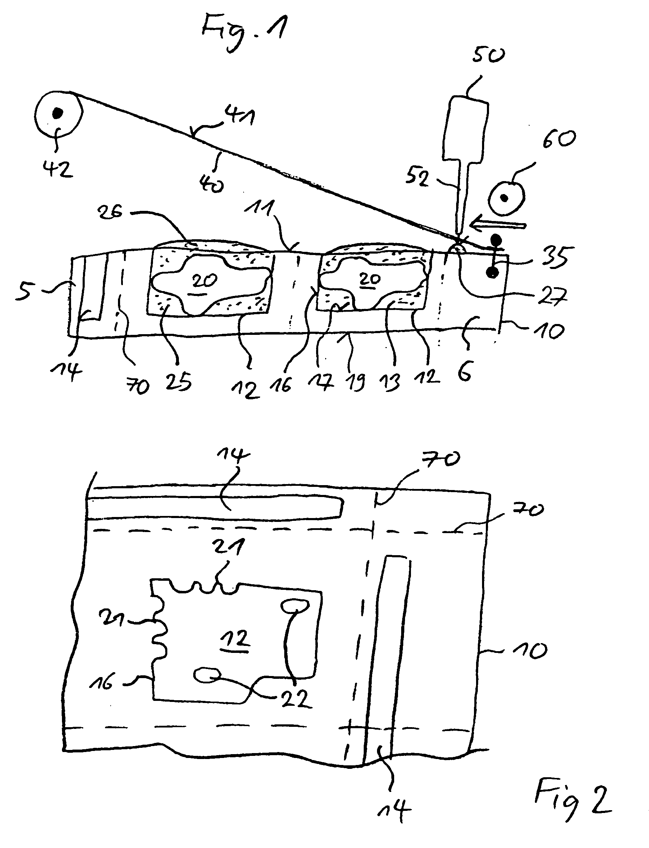

Die in Fig. 1 stark schematisiert wiedergegebene Fertigungssituation zeigt im Querschnitt einen flächigen Kernschichtbogen 10 mit zwei als Oberfläche 11 bzw. als einer Rückfläche 19 bezeichneten Außenseiten. Zugrundegelegt wird im folgenden eine Mehrnutzenfertigung, bei der in dem Kernschichtbogen 10 zunächst mehrere Datenträger 1 erzeugt und später vereinzelt werden. Das beschriebene Verfahren läßt sich aber ohne weiteres auch jeweils an einem einzelnen Datenträger durchführen.

In dem Kernschichtbogen 10 - im folgenden einfach als Kernschicht bezeichnet - sind zwei zur Oberfläche 11 hin geöffnete Ausnehmungen 12 zur Aufnahme von Einbauelementen 20 sowie ein gleichfalls zur Oberfläche 11 geöffneter Auffanggraben 14 angelegt. Die Ausnehmungen 12 sind etwas größer als die darin plazierten Einbauelemente 20. Die Einbauelemente 20 können unregelmäßige Außenkonturen besitzen.

In den Freiräumen 13 zwischen Wandung 16 und Boden 17 der Ausnehmungen 12 und der Außenkontur der Einbauelemente 20 befindet sich Füllmaterial 25. Ebenso ist der offene Raum über den Einbauelementen 20 zur Oberfläche 11 hin mit Füllmaterial 26 aufgefüllt. Das oberseitige Füllmaterial 26 ragt dabei, wie in Fig.1 angedeutet, zunächst über die Ebene der Oberfläche 11 hinaus. Mit der Bezugszahl 70 sind Trennlinien bezeichnet, entlang derer zu einem späteren Zeitpunkt die dann fertigen Datenträger 1 aus der Kernschicht 10 vereinzelt werden. Der in Fig.1 linke Randbereich 5 der Kernschicht 10, in dem sich der Auffanggraben 14 befindet, sowie der in Fig. 1 rechte Randbereich 6, an dem die Deckfolie 40 fixiert ist, werden bei der Vereinzelung abgetrennt.

Über der Oberfläche 11 befindet sich eine Folienrolle 42, von der eine Deckfolie 40 abgewickelt wird. Die Deckfolie 40 ist in dem Randbereich 6 entlang der Außenkante der Kernschicht 10 mittels einer Fixierung 35 an der Kernschicht 10 befestigt. Zwischen Oberfläche 11 und Deckfolie 40 befindet sich, gleichfalls im Randbereich 6, ein Füllmaterialdepot 27, das von einer Dosiereinrichtung 50 über eine geeignete Zuführung 52 aufgespendet wird. Oberhalb der Deckfolie 40, oberhalb des Randbereiches 6 befindet sich weiterhin eine z.B. Rakel 60, die in der durch den Pfeil angedeuteten Richtung über die Oberfläche 11 gezogen oder gerollt wird.

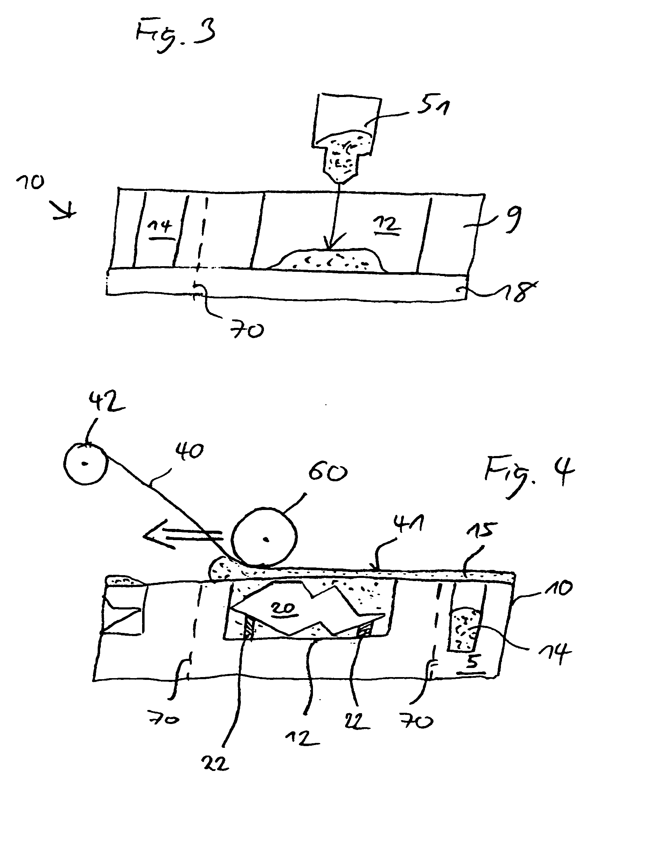

Die Kernschicht 10 basiert typischerweise auf einem Verbund mehrerer Einzelfolien, die z.B. durch Heißlaminieren zusammengefügt wurden. Das Anlegen der Ausnehmungen 12 sowie der Auffanggräben 14 erfolgt dann zweckmäßig, indem diese zunächst aus einer Kernfolie 9 ausgestanzt werden. Anschließend wird, wie aus Fig. 3 ersichtlich, auf die Unterseite zur Bildung der späteren Rückfläche 19 eine Abschlußfolie 18 aufgebracht, z. B. durch Heißlaminieren. Alternativ zur Herstellung mit mehreren Folien durch Stanzen und Wiederverschließen kann das Anlegen der Ausnehmungen 12 und der Auffanggräben 14 durch Spritzgießen einer fertigen Kernschicht 10 erfolgen; dabei werden dann Ausnehmungen 12 und Auffanggräben 14 unmittelbar erzeugt. In einer weiteren Variante werden die Ausnehmungen 12 und Auffanggräben 14 mittels einer Frästechnik erzeugt.

Fig. 2 veranschaulicht die geometrische Anordnung von Ausnehmungen 12 und Auffanggräben 14 in einer Aufsicht auf einen Ausschnitt einer Kernschicht 10. Die Ausnehmungen 12 liegen dabei in einem Raster von Zeilen und Spalten nebeneinander im Innenbereich der Kernschicht 10. Im Randbereich 6 sind vorzugsweise entlang den Außenkanten der Kernschicht 10 Auffanggräben 14 ausgebildet. Anzahl und Geometrie der Auffanggräben 14, vor allem Breite und Länge, sind so dimensioniert, daß sie bei der Durchführung des Herstellungsverfahrens verdrängtes, überschüssiges Füllmaterial 25, 26, 27 aufnehmen können. Anstatt durchgehender Auffanggräben 14, wie in Fig. 2 angedeutet, können daher auch in mehrere kleine Abschnitte geteilte Auffanggräben 14 oder Anordnungen von jeweils mehreren parallelen Auffanggräben 14 vorgesehen sein. Auch ist es möglich Auffanggräben 14 zwischen einzelnen Zeilen oder Spalten von Ausnehmungen 12 anzuordnen. In einer weiteren Gestaltungsvariante ist um jede Ausnehmung 12 herum ein umlaufender Auffanggraben 14 vorgesehen, der in eine größere Überlaufwanne mündet. In allen Gestaltungsvarianten sind die Auffanggräben 14 aber stets so plaziert, daß sie außerhalb der Trennlinien 70 liegen, entlang derer später die fertigen Datenträger 1 aus der Kernschicht 10 herausgeteilt werden.

Um seine Plazierung zu unterstützen weist die Ausnehmung 12 auf die Außenform des Einbauelementes 20 abgestimmte Positionierhilfen 21, 22 auf. Diese sind beispielsweise, wie in Fig. 2 angedeutet, zum einen als Reliefstruktur 21 an der vertikalen Innenwandung 16 der Ausnehmung 12 ausgebildet. Zum anderen können, alternativ oder zusätzlich, auf dem Boden 17 der Ausnehmung 12 Stützelemente 22 ausgebildet sein. Die in Fig. 2 angedeuteten Geometrien der Positionierhilfen 21, 22 verstehen sich dabei nur beispielhaft; praktisch sind die Positionierhilfen 21, 22 an die Kontur des Einbauelementes 20 angepaßt und fixieren dieses in einer definierten Position innerhalb der Ausnehmung 12.

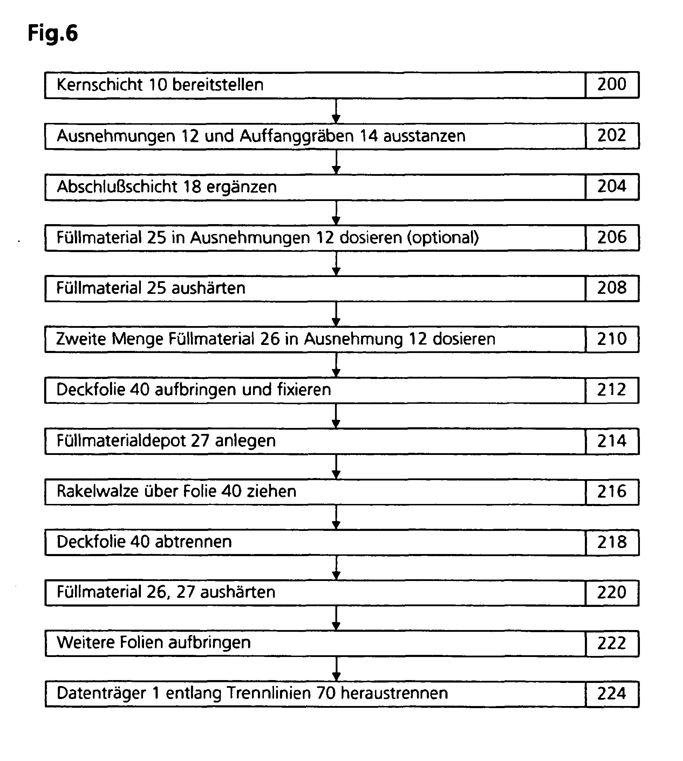

Anhand des Flußdiagramms in Fig. 6 wird nachfolgend die Herstellung eines Datenträgers 1 als Folge von Bearbeitungsschritten beschrieben. Die Herstellung setze ein mit der Bereitstellung der Kernschicht 10, Schritt 200. Die Kernschicht 10 kann zum Beispiel durch Laminieren mehrerer Einzelfolien erhalten werden. Sie kann transparent oder opak sein und zu einer der beiden Außenseiten 11, 19 hin ein graphisches Design und/ oder Sicherheitselemente tragen.

In der Kernschicht 10 werden nachfolgend die Ausnehmungen 12 und die Auffanggräben 14 angelegt, Schritt 202; dies kann etwa durch Ausstanzen einer Kernfolie 9 und nachfolgendes Anbringen einer Abschlußschicht 18 unter die zuvor erzeugten Ausnehmungen 12 und Auffanggräben 14 rückseitig erfolgen, Schritt 204.

Nachfolgend wird, wie in Fig. 3 veranschaulicht, mittels einer Dosiereinrichtung 51 - bei der es sich auch um die Dosiereinrichtung 50 handeln kann -, eine erste Menge vorzugsweise flüssiges Füllmaterial 25 in die Ausnehmungen 12 dosiert, Schritt 206. Die Menge an Füllmaterial 25 ist dabei so bemessen, daß es die Freiräume 13 zwischen Wandung 16 und Boden 17 der Ausnehmungen 12 und Einbauelementen 20 nach deren Einsetzen möglichst vollständig ausfüllt. Bei dem Füllmaterial 25 kann es sich zum Beispiel um einen lichtaktivierbaren Klebstoff handeln.

In das noch fließfähige Füllmaterial 25 in den Ausnehmungen 12 werden anschließend die Einbauelemente 20 eingesetzt, Schritt 208, z.B. mittels eines - nicht dargestellten - Saugarmes, wobei das Füllmaterial 25 in die Freiräume 13 gedrängt wird. Beim Einsetzen werden die Einbauelemente 20 an den Positionierhilfen 21, 22 ausgerichtet. Die Einbauelemente 20 können auch aus mehreren Teilekomponenten bestehen, die beispielsweise nacheinander eingesetzt werden, etwa aus einem Display und einem zuerst einzusetzenden Steuermodul. Das Füllmaterial 25 wird sodann ausgehärtet, Schritt 208. Dies kann beispielsweise durch Belichtung von der Rückfläche 19 her erfolgen. Während des Aushärtens wird gegebenenfalls die Position der Einbauelemente 20 nachjustiert, indem diese gegen die Positionierhilfen 21, 22 gedrückt werden.

Nachfolgend, Schritt 210, wird mittels der Dosiereinrichtung 51 eine zweite Menge Füllmaterial 26 in die Ausnehmung 12 dosiert; das Füllmaterial 26 ist dabei zweckmäßig dasselbe wie das zuerst eingebrachte. Die Menge des Füllmaterials 26 ist so gemessen, daß es die Ausnehmung 12 mit dem darin befindlichen Einbauelement 20 vollständig ausfüllt und darüberhinaus einen leichten Überschuß bildet, der über die Oberfläche 11 der Kernschicht 10 hinausragt.

Über die so vollständig verfüllten Ausnehmungen 12 wird anschließend die Deckfolie 40 gebracht und mittels der Fixierung 35 im Randbereich 6 der Kernschicht 10 fixiert, Schritt 212. Die Deckfolie 40 wird dabei zunächst so bereitgestellt, daß sie, wie in Fig.1 angedeutet, die Oberfläche 11 der Kernschicht 10 und ebenso die Füllmaterialüberstände 26 noch nicht berührt. Die Deckfolie 40 kann zur Oberfläche 11 hin mit Klebstoff beschichtet sein.

In den Randbereich 6 der Kernschicht 10, außerhalb der Trennlinien 70, wird sodann mittels der Dosiereinrichtung 50 punktuell eine dritte Menge von Füllmaterial 27 als Depot dosiert; das Füllmaterial 27 ist zweckmäßig wiederum identisch mit dem zuvor verwendeten. Das Füllmaterialdepot 27 erstreckt sich dabei zweckmäßig über die ganze Breite der Kernschicht 10 und hat beispielsweise die Form einer Walze, einer Düne oder einer Folge von Haufen.

Im folgenden wird die Deckfolie 40 auf die Kernschicht 10 aufgebracht und mit dieser verbunden. Hierzu wird die Rakel 60 beginnend im Randbereich 6 bei der Fixierung 35 in Richtung des Pfeils über die Deckfolie 40 gezogen, wobei, wie in Fig. 4 veranschaulicht, die Deckfolie 40 gegen die Oberfläche 11 der Kernschicht 10 gedrückt wird, Schritt 216. Durch die Druckbewegung werden zunächst das Füllmaterialdepot 27 nächst der Fixierung 35 und nachfolgend die über die Ausnehmungen 12 herausragenden Füllmaterialüberstände 26 über die gesamte Oberfläche 11 der Kernschicht 10 verdrängt und gleichmäßig ausgebreitet. Überschüssiges Füllmaterial 26, 27 wird dabei, wie in Fig. 4 rechts angedeutet, in die Auffanggräben 14 gedrängt. Der bei der Bewegung der Rakel60 gegen die Oberfläche 11 ausgeübte Duck wird so eingestellt, daß zwischen Deckfolie 40 und Oberfläche 11 ein Film 15 von Füllmaterial 26, 27 mit einer gewünschten Stärke ausbildet. Füllmaterial 26, 27, Stärke des Füllmaterialfilms 15 und Druck können dabei insbesondere so aufeinander abgestimmt werden, daß das Einbauelement 20 wenig oder gar nicht druckbelastet wird. Nachdem die Rakel 60 vollständig über die Kernschicht 10 bewegt wurde, liegt die Deckfolie 40 unter Zwischenlage einer dünnen Schicht von Füllmaterial 26, 27 gleichmäßig über der Oberfläche 11 der Kernschicht 10.

Die Deckfolie 40 wird danach am Rand der Kernschicht 10 abgetrennt, Schritt 218. Anschließend wird das Füllmaterial 26, 27 ausgehärtet, Schritt 220; dies kann zum Beispiel durch Belichtung von der Oberseite 11 her erfolgen.

Auf die danach vorliegende Struktur können optional vorder- und/ oder rückseitig noch weitere Folien, z.B. Designfolien aufgebracht werden, Schritt 222.

Schließlich werden die danach vorliegenden fertigen Datenträger 1 entlang der Trennlinie 70 aus der Kernschicht 10 herausgetrennt, etwa durch Stanzen oder Schneiden. Die Randbereiche 5, 6 mit den Auffanggräben 14 bzw. mit der Fixierung 35 bleiben übrig und werden entsorgt.

Unter Beibehaltung des grundlegenden Ansatzes, einen Datenträger 1 mit Einbauelement 20 herzustellen, indem das Einbauelement 20 in eine in dem Datenträger 1 vorbereitete Ausnehmung 12 eingesetzt, die Ausnehmung 12 sodann in mehreren Schritten mit Füllmaterial 25, 26, 27 verfüllt und überstehendes Füllmaterial anschließend mit Hilfe einer Rakel 60 unter Zwischenlage einer Deckfolie 40 ausgewalzt bzw. eingerakelt wird, gestattet die erfindungsgemäße Lösung eine Vielzahl von weiteren Ausgestaltungen. So können einzelne Verfahrensschritte entfallen, etwa die Schritte 208 oder 222, oder durch Ausführung zu einem anderen Zeitpunkt vorweggenommen oder nachgeholt werden; beispielsweise kann das Anlegen eines Füllmaterialüberschusses nur durch einen der Schritte 210 oder 214 erfolgen. Auch können weitere Schritte eingefügt werden. Beispielsweise kann vorgesehen sein die nach dem Aushärten des Füllmaterials 25, 26, 27 in Schritt 220 vorliegende Struktur noch einmal in einer geeigneten Vorrichtung zu erwärmen, um beim Auswalzen der Deckfolie 40 entstandene Oberflächenspannungen abzubauen und eine sehr glatte Oberfläche 41 zu erhalten. Das Aushärten des Füllmaterials 25, 26, 27 kann auch bereits während des Auswalzens der Deckfolie 40 oder sogar vor Beginn des Auswalzens der Deckfolie 40 begonnen werden. Es kann ferner in einem einzigen einheitlichen Schritt oder in mehr als den im Beispiel angegebenen Teilschritten erfolgen. Desweiteren können anstelle der angeführten alternative Verfahrenschritte vorgesehen sein, etwa Spritzgießen einer Kernschicht anstelle von Stanzen und Ergänzen einer Abschlußschicht gemäß Schritten 202, 204.

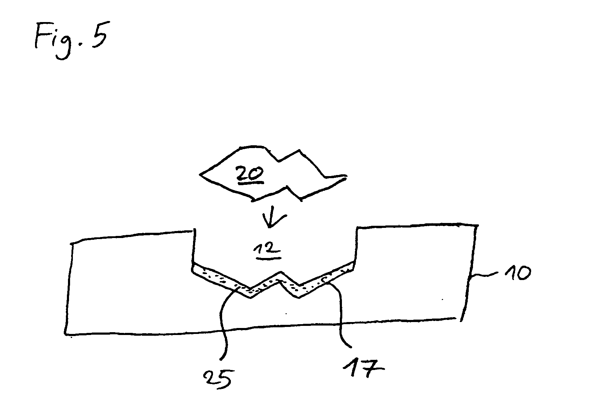

In das Füllmaterial 25, 26, 27 können ferner Sicherheitselemente eingebracht sein, etwa reflektierende oder magnetische Partikel oder thermisch reaktive Komponenten. In einer vorteilhaften, in Fig. 5 veranschaulichten Variante des Schrittes 206 wird für die erste Menge Füllmaterial 25 ein nicht fließender Stoff verwendet, der die Innenkontur der Ausnehmung 12 genau nachbildet. Der Boden 17 der Ausnehmung 12 kann dann eine an die Kontur des Einbauelementes 20 angepaßte konturierte Oberfläche besitzen, so daß ein angepaßter, abgestufter Freiraum entsteht, in die das Einbauelement 20 paßgenau eingesetzt werden kann.

Erhebliche Gestaltungsfreiheit steht auch bei der Bereitstellung der Deckfolie 40 und der Einrichtung ihrer Fixierung 35. Der hergestellte Datenträger 1 kann weiterhin ein fertiges Erzeugnis, z. B. eine Chipkarte mit einem Display sein, aber auch ein Halbzeug, etwa ein Inlett mit einem Display, das zum Erhalt eines gebrauchsfertigen Erzeugnisses mit weiteren Komponenten verbunden werden muß.

## Patentansprüche

1. Verfahren zum Herstellen eines Datenträgers (1), der ein Einbauelement (20) aufweist, wobei eine Kernschicht (10) bereitgestellt, darin eine Ausnehmung (14) angelegt und in diese das Einbauelement (20) plaziert wird, und die zwischen Ausnehmungswandung und Einbauelement (20) verbleibenden Freiräume (13) durch mechanisches Verteilen eines zunächst punktuell aufgebrachten Füllmaterials (25) von der Oberfläche der Kernschicht aus drucklos verfüllt werden, **dadurch gekennzeichnet, daß** zunächst ein Überschuß an Füllmaterial (25, 26, 27) in den Ausnehmungen (12) und/oder auf der Oberfläche (11) der Kernschicht (10) bereitgestellt wird und das Füllmaterial (25, 26, 27) unter Zwischenlage einer Deckfolie (40) sodann über die Oberfläche (11) ausgewalzt oder ausgerakelt wird, wobei sich zwischen Deckfolie (40) und Oberfläche (11) der Kernschicht (10) ein Film (15) von Füllmaterial (26, 27) ausbildet.

2. Verfahren nach Anspruch 1 **dadurch gekennzeichnet, daß** ein Depot von Füllmaterial (27) in einem Randbereich (6) der Kernschicht (10), welcher nicht Bestandteil des späteren Datenträgers (1) ist, aufgebracht wird.

3. Verfahren nach Anspruch 1 **dadurch gekennzeichnet, daß** die in der Kernschicht (10) angelegte Ausnehmung (12) größer ist als das Einbauelement (20).

4. Verfahren nach Anspruch 1 **dadurch gekennzeichnet, daß** die Ausnehmung (12) eine Positionierhilfe (21, 22) aufweist, welche die Position des Einbauelements (20) in der Ausnehmung (12) festlegt.

5. Verfahren nach Anspruch 4 **dadurch gekennzeichnet, daß** die Positionierhilfe (21, 22) als Reliefstruktur (21) an der Wandung (16) der Ausnehmung (12) und/ oder als Stützelement (22) auf dem Boden der Ausnehmung (12) ausgebildet ist.

6. Verfahren nach Anspruch 1 **dadurch gekennzeichnet, daß** in der Kernschicht (10) benachbart zu der Ausnehmung (12) wenigstens einen Auffanggraben (14) angelegt ist, der zur Aufnahme überschüssigen Füllmaterials (25, 26, 27)dient.

7. Verfahren nach Anspruch 1 **dadurch gekennzeichnet, daß** die Ausnehmung (12) hergestellt wird, indem zunächst ein Durchbruch in ein er Kernfolie (9) angelegt und diese sodann mittels einer Abschlußschicht (18) rückseitig verschlossen wird.

8. Verfahren nach Anspruch 1 **dadurch gekennzeichnet, daß** in die Ausnehmung (12) vor dem Einsetzen des Einbauelementes (20) eine erste Menge Füllmaterial (25) dosiert wird.

9. Verfahren nach Anspruch 8 **dadurch gekennzeichnet, daß** das Füllmaterial (25) nach Einsetzen des Einbauelementes (20) ausgehärtet wird.

10. Verfahren nach Anspruch 8 **dadurch gekennzeichnet, daß** nach Einsetzen des Einbauelementes (20) in die Ausnehmung (12) eine zweite Menge Füllmaterial (26) in die Ausnehmung (12) dosiert wird.

11. Verfahren nach Anspruch 1 **dadurch gekennzeichnet, daß** eine Deckfolie (40) im Randbereich (6) der Kernschicht (10) mittels einer Fixierung (35) an dieser befestigt wird.

12. Verfahren nach Anspruch 1 **dadurch gekennzeichnet, daß** die Deckfolie (40) beginnend von dem Randbereich (6) der Kernschicht (10) über die Oberfläche (11) und die Ausnehmungen (12) mit dem Füllmaterial (25, 26, 27) aufgerakelt oder aufgerollt wird.

13. Verfahren nach Anspruch 1 **dadurch gekennzeichnet, daß** das Füllmaterial (26, 27) nach dem Aufbringen der Deckfolie (40) ausgehärtet wird.

14. Verfahren nach Anspruch 1 **dadurch gekennzeichnet, daß** der Randbereich der Kernschicht (6) entlang der Trennlinien (70) abgetrennt wird, so daß ein Datenträger (1) entsteht.

15. Vorrichtung zur Durchführung eines Verfahrens gemäß den Ansprüchen 1 bis 14, mit Mitteln zur Halterung einer Kernschicht (10), die eine Ausnehmung (12) aufweist, in die ein Einbauelement (20) eingesetzt ist, einer Dosiereinrichtung (50) zum Aufbringen von Füllmaterial (25) auf die Oberfläche (11) der Kernschicht (10), sowie Mitteln zum Bereitstellen einer Deckfolie (46), **dadurch gekennzeichnet, daß** sie eine auf die Oberseite (41) der Deckfolie (40) wirkende Rakel oder Auswalzrolle (60) aufweist, die so über die Deckfolie (40) bewegt wird, daß diese unter Verdrängung eines Teils des zwischen Deckfolie (40) und Oberfläche (11) befindlichen Füllmaterials (26, 27) gegen die Oberfläche (11) gedrückt wird.

## Claims

1. A method for producing a data carrier (1) having a mounted element (20), wherein a core layer (10) is supplied, a recess (14) is produced therein and the mounted element (20) placed in the latter, and the free spaces (13) remaining between recess wall and mounted element (20) are filled pressurelessly by mechanical distribution of a filling material (25) initially applied in pointwise fashion, from the surface of the core layer, **characterized in that** an excess of filling material (25, 26, 27) is first supplied in the recesses (12) and/or on the surface (11) of the core layer (10), and the filling material (25, 26, 27) is then rolled out or doctored out over the surface (11) with interposition of a cover foil (40), wherein a film (15) of filling material (26, 27) forms between cover foil (40) and surface (11) of the core layer (10).

2. The method according to claim 1, **characterized in that** a reservoir of filling material (27) is applied in an edge area (6) of the core layer (10), said edge area not being part of the later data carrier (1).

3. The method according to claim 1, **characterized in that** the recess (12) created in the core layer (10) is larger than the mounted element (20).

4. The method according to claim 1, **characterized in that** the recess (12) has a positioning aid (21, 22) which defines the position of the mounted element (20) in the recess (12).

5. The method according to claim 4, **characterized in that** the positioning aid (21, 22) is configured as a relief structure (21) on the wall (16) of the recess (12) and/or as a support element (22) on the bottom of the recess (12).

6. The method according to claim 1, **characterized in that** there is created in the core layer (10), neighboring to the recess (12), at least one collecting groove (14) which serves to receive excess filling material (25, 26, 27).

7. The method according to claim 1, **characterized in that** the recess (12) is produced by first creating a hole in a core foil (9) and then closing the latter on the back by means of a closing layer (18).

8. The method according to claim 1, **characterized in that** a first amount of filling material (25) is metered into the recess (12) before insertion of the mounted element (20).

9. The method according to claim 8, **characterized in that** the filling material (25) is cured after insertion of the mounted element (20).

10. The method according to claim 8, **characterized in that** after insertion of the mounted element (20) into the recess (12) a second amount of filling material (26) is metered into the recess (12).

11. The method according to claim 1, **characterized in that** a cover foil (40) is fastened in the edge area (6) of the core layer (10) thereto by a fixing means (35).

12. The method according to claim 1, **characterized in that** the cover foil (40) is doctored on or rolled on over the surface (11) and the recesses (12) with the filling material (25, 26, 27) beginning at the edge area (6) of the core layer (10).

13. The method according to claim 1, **characterized in that** the filling material (26, 27) is cured after application of the cover foil (40).

14. The method according to claim 1, **characterized in that** the edge area of the core layer (6) is detached along the separating lines (70), so that a data carrier (1) arises.

15. An apparatus for carrying out a method according to claims 1 to 14, with means for holding a core layer (10) having a recess (12) into which a mounted element (20) is inserted, a metering device (50) for applying filling material (25) to the surface (11) of the core layer (10), and means for supplying a cover foil (40), **characterized in that** it has a doctor knife or roll-out roller (60) acting on the upper side (41) of the cover foil (40) and being moved over the cover foil (40) such that the latter is urged against the surface (11) while displacing a part of the filling material (26, 27) located between cover foil (40) and surface (11).

## Revendications

1. Procédé de fabrication d'un support de données (1) qui comporte un élément d'encastrement (20), une couche noyau (10) étant mise à disposition, un évidement (14) étant pratiqué dans cette dernière et l'élément d'encastrement (20) étant placé dans ce dernier, et les espaces libres (13) restant entre la paroi de l'évidement et l'élément d'encastrement (20) étant comblés par répartition mécanique d'un matériau de remplissage (25) appliqué sans pression tout d'abord de manière ponctuelle à partir de la surface de la couche noyau, **caractérisé en ce que**, tout d'abord, un excédent de matériau de remplissage (25, 26, 27) est mis à disposition dans les évidements (12) et/ou sur la surface (11) de la couche noyau (10) et le matériau de remplissage (25, 26, 27) est ensuite passé au rouleau ou raclé par-dessus la surface (11) en interposant une feuille de recouvrement (40), un film (15) de matériau de remplissage (26, 27) se constituant entre la feuille de recouvrement (40) et la surface (11) de la couche noyau (10).

2. Procédé selon la revendication 1, **caractérisé en ce qu'**un dépôt de matériau de remplissage (27) est appliqué dans une zone marginale (6) de la couche noyau (10), laquelle zone n'étant pas partie constituante du futur support de données (1).

3. Procédé selon la revendication 1, **caractérisé en ce que** l'évidement (12) pratiqué dans la couche noyau (10) est plus grand que l'élément d'encastrement (20).

4. Procédé selon la revendication 1, **caractérisé en ce que** l'évidement (12) comporte un mécanisme de positionnement (21, 22) qui détermine la position de l'élément d'encastrement (20) dans l'évidement (12).

5. Procédé selon la revendication 4, **caractérisé en ce que** le mécanisme de positionnement (21, 22) est réalisé sous forme de structure en relief (21) sur la paroi (16) de l'évidement (12) et/ou en tant qu'élément de soutien (22) sur le fond de l'évidement (12).

6. Procédé selon la revendication 1, **caractérisé en ce que**, dans la couche noyau (10), de manière avoisinant l'évidement (12), au moins un sillon d'interception (14) servant à recueillir du matériau de remplissage (25, 26, 27) excédent est pratiqué.

7. Procédé selon la revendication 1, **caractérisé en ce que** l'évidement (12) est fabriqué, ce qui a lieu **en ce qu'**un percement est tout d'abord pratiqué dans une feuille noyau (9) et **en ce que** cette dernière est ensuite refermée sur son envers au moyen d'une couche d'achèvement (18).

8. Procédé selon la revendication 1, **caractérisé en ce que**, dans l'évidement (12), avant l'insertion de l'élément d'encastrement (20), une première quantité de matériau de remplissage (25) est dosée.

9. Procédé selon la revendication 8, **caractérisé en ce que** le matériau de remplissage (25) est durci après insertion de l'élément d'encastrement (20).

10. Procédé selon la revendication 8, **caractérisé en ce que**, après insertion de l'élément d'encastrement (20) dans l'évidement (12), une deuxième quantité de matériau de remplissage (26) est dosée dans l'évidement (12).

11. Procédé selon la revendication 1, **caractérisé en ce qu'**une feuille de recouvrement (40) est fixée dans la zone marginale (6) de la couche noyau (10) au moyen d'une fixation (35) à cette dernière.

12. Procédé selon la revendication 1, **caractérisé en ce que** la feuille de recouvrement (40) est, en commençant par la zone marginale (6) de la couche noyau (10), raclée ou déroulée avec le matériau de remplissage (25, 26, 27) par-dessus la surface (11) et les évidements (12).

13. Procédé selon la revendication 1, **caractérisé en ce que** le matériau de remplissage (26, 27) est durci après l'application de la feuille de recouvrement (40).

14. Procédé selon la revendication 1, **caractérisé en ce que** la zone marginale de la couche noyau (6) est détachée le long des lignes de séparation (70), de telle sorte qu'un support de données (1) est engendré.

15. Dispositif d'exécution d'un procédé selon les revendications de 1 à 14, comprenant des moyens d'attache d'une couche noyau (10) qui comporte un évidement (12) dans lequel un élément d'encastrement (20) est inséré, un équipement de dosage (50) pour l'application de matériau de remplissage (25) sur la surface (11) de la couche noyau (10), ainsi que des moyens de mise à disposition d'une feuille de recouvrement (40), **caractérisé en ce qu'**il comporte une racle ou un rouleau (60) qui agit sur la face supérieure (41) de la feuille de recouvrement (40) et qui est mû de telle sorte par-dessus la feuille de recouvrement (40) que cette dernière est pressée contre la surface (11) en refoulant une partie du matériau de remplissage (26, 27) se trouvant entre la feuille de recouvrement (40) et la surface (11).
